Europäisches Patentamt

European Patent Office

Office européen des brevets

(19)

(11) Publication number : **0 667 592 A1**

## (12) EUROPEAN PATENT APPLICATION

(21) Application number : **95400178.0**

(22) Date of filing : **27.01.95**

(51) Int. Cl.$^6$ : **G06K 19/06,** G06K 7/14

(30) Priority : **28.01.94 FR 9400971**
**14.11.94 FR 9413611**

(43) Date of publication of application :
**16.08.95 Bulletin 95/33**

(84) Designated Contracting States :
**DE FR GB**

(71) Applicant : **Canon Inc.**
**No. 30-2, Shimomaruko 3-chome**
**Ohta-ku, Tokyo 146 (JP)**

(72) Inventor : **Coudray, Pascal**
**18, rue de la Jannaie**
**F-35520 La Chapelle des Fougeretz (FR)**

(74) Representative : **Rinuy, Santarelli**
**14, avenue de la Grande Armée,**
**B.P. 237**
**F-75822 Paris Cédex 17 (FR)**

(54) Method of coding information in the form of bar codes, a method of reading the latter and devices implementing these methods.

(57) The coding method consists, after representing each item of information by an m-bit word, of expressing this word in code, representing each bit by a bar with a first or second reflection factor of unit width, according to whether the bit is equal to "0" or "1", the juxtaposition of two or more bits of the same binary value being represented by a single bar of a width greater than the unit width and an actual multiple of $2^n$ times the unit width, n being equal to the number of juxtaposed bits.

A reading method consists, in an initial cycle, of determining the unit width of the bars with each of the factors by measuring the time elapsed during scanning, with an optical reader, between two successive factor transitions for a series of bars of identical width and equal to a predetermined multiple of the unit width ; storing this width, storing the corresponding logic state ; and updating the unit width in the course of the measurement of the width of each bar in the series. This method may also include an iterative cycle consisting, after the measurement of the width of the last two bars in the said series, of comparing the width equivalent to the scanning time for the subsequent bar with the same factor as the bar which enabled the unit width to be determined with predetermined threshold multiples of the unit width.

Devices implementing these methods are also provided.

Fig.1

EP 0 667 592 A1

The present invention concerns a method of coding information in the form of bar codes, and a method of reading the latter. The present invention also concerns devices implementing these methods.

Here, "bar codes" is intended to mean any system of coding information, notably alphanumeric characters, by means of the juxtaposition of bars having, in alternation, a first and then a second reflection factor suitable for optical reading, and having variable thicknesses. Examples are, amongst known standard codes, the codes known as "UPC", "CODABAR", "Two out of five interlaced", representing numbers as well as a few special characters, and also "Code 39", "Code 93" and "Code 128", the latter enabling all the characters in the ASCII table to be coded.

When a system for coding information in bar-code form is chosen, it is necessary to select the system having an alphabet which is sufficient for the requirements of the application. This is because some systems are only able to represent figures or even a few special characters. This is the case with the "CODABAR" code. Others offer a more extensive character font, including for example the alphabet (Code 128 for example).

Depending on the application envisaged, the reliability of reading, that is to say the risk of error in interpreting a bar code, may be a determining factor and may necessitate the choice of a coding system affording a self check on each character.

The means of printing bar codes and the readers used may be sources of certain limits with regard to the use of these coding systems.

When information is coded in the form of bar codes, it is sometimes necessary to take into account the density of the information which may be stored, that is to say the maximum number of characters which can be coded on a given length of bar code.

The extent of the font has an influence in particular on the density of the information stored in a bar code.

For a resolution of 190 μm (that is to say the smallest vertical line, or bar, will have this width) and a ratio of 2.2:1 (the ratio between a small line and a wide line), the "Two out of five interlaced" code system enables approximately 7 characters per cm to be coded.

For a resolution of 200 μm (that is to say the smallest vertical line will have this width) and a ratio of 2.25:1 (the ratio between a small line and a wide line), the "Code 39" system will enable approximately 3.7 characters per cm to be coded. Code 93, for a resolution of 200 μm, can achieve a resolution of 4 characters per centimetre.

If it is desired to increase or reduce this density, it is then necessary to modify the width of each of these vertical bars.

Nevertheless, since these bar codes are printed on conventional printing systems, such as a laser printer, the minimum width of a vertical bar must necessarily take account of the resolution of this printer. In addition, even if such bar codes are successfully printed, it is necessary to use bar-code readers with an increasingly fine resolution: such readers then become complicated, expensive and inconvenient.

This is all the more true if it is desired, for reasons of cost, to use readers of the optical pen type. With this type of reader, the movement of the beam over the bar code is provided by the user. The speed of scanning the bar code is therefore directly dependent on the user: any variation in this speed of movement interferes with the quality of the reading and introduces errors in interpretation between a wide bar and a narrow bar, especially if the ratio between the two is low (around 2), sometimes necessitating several scans before it is possible to obtain correct capture. This problem is inconvenient for the user.

Thus, for practical reasons, the minimum width of a vertical bar is necessarily limited.

On the other hand, if it is desired to store a large amount of information within a single bar code, it is necessary to produce bar codes of a fairly long length. Because of their length, the bar codes produced in this way prove to be fairly impractical to use.

In general terms, the present invention aims to mitigate these drawbacks by making it possible to increase the density of information stored per unit length of bar code.

This object is of all the more interest to the inventors since they use, within the scope of French patent application No 93.10352, bar codes for controlling a facsimile machine with regard to its operation, notably by storing the numbers of correspondents on bar codes which the user will subsequently scan with an optical pen in order to send a fax.

The inventors first of all sought to develop a method of coding information (notably alphanumeric information) in the form of bar codes in which the density of information per unit length is high.

At the same time the inventors sought to develop such a method favouring, from the point of view of size, sequences of figures, within the framework of application to the control of facsimile machines.

The inventors also sought to develop a coding method making it possible to maintain high ratios between wide bars and thin bars, this guaranteeing, even for high densities, a high success rate at first reading and consequently a convenient use of readers of the optical pen type.

The inventors also sought to provide a bar code of simple structure, which can be used, when transcoding information to be coded and expressing it in bar code form, by means of logic devices of simple structure and with conventional printing means within an office machinery environment.

Finally, the inventors, in a similar manner, sought to develop a bar code of simple structure which, when decoding bar codes, can be used by means of logic devices which have a simple structure and are consequently inexpensive.

Thus the object of the present invention is first of all a method of coding information in bar code form, characterised in that it consists of:

- representing each of the items of information to be coded by a so-called "simple" binary word of m bits,
- expressing the binary word as a bar code: on the one hand by representing, in order of appearance in the binary word, each of the bits by a bar with a first or second reflection factor and of a predetermined unit width depending on whether it has a binary value equal to "0" or "1"; and on the other hand by representing a juxtaposition of two or more bits of the same binary value by a single bar having the reflection factor corresponding to this value and having a width greater than the said predetermined unit width, the greater width being an actual multiple of $2^n$ times the predetermined unit width, n being equal to the number of juxtaposed bits.

In a preferred embodiment, the said actual multiple is chosen to be equal to one.

By means of these arrangements the coding method mitigates the drawbacks set out above.

It will be observed first of all that the coding structure for the information (the latter usually consisting of alphanumeric characters) is simple since it initially involves a transcoding of the said information in binary form, and then an expression of the transcoding consisting of allocating a bar having a first reflection factor to one of the logic values "1" or "0", and a bar having the other reflection factor to the other logic value.

In addition, the representation of a sequence of several bits of the same logic value is particularly simple, since it consists of allocating, to the group of bits of the same value, a bar whose width increases with the number of juxtaposed bits.

In this regard, the progression law chosen ($2^n$, "n" being equal to the number of juxtaposed bits of the same logic value) is particularly simple to implement with the current logic means.

In addition, such a law affords an appreciably more reliable decoding than in the case where the greater width increases in a simply linear fashion as a function of the number of bits of the same logic value. A progression of the bar widths according to the invention advantageously makes it possible to compensate for variable scanning speeds of the optical pen used for decoding.

Moreover, for the same resolution of a reading or graphical representation, for example printing, device, a very appreciable increase in the density of characters per unit length is found, notably compared with the codes of the prior art mentioned above.

Advantageously, in a preferred embodiment, and according to another characteristic of the invention, when several items of information have to be coded on a single bar code, the binary words representing each of the said items of information are juxtaposed in order to form a single, so-called "complex", binary word; each complex binary word being expressed as a bar code in the same way as simple binary words.

By virtue of this characteristic, it is possible to reduce the size of a bar code including several items of information still further. This is because, in the prior art, and notably in Code 39, each character coded in the form of a bar code must be separated from the other characters by a gap, which increase the size of an overall bar code including several characters and means that the decoder must perform a special processing. By virtue of the present invention, the binary words are juxtaposed, no spacing therefore being present between them. The density of the information is thereby increased and the complexity of the decoder decreased.

According to another characteristic advantageously used in a preferred embodiment of the method according to the invention, the said predetermined unit width is the same for the bars with the first reflection factor and for those with the second factor.

This characteristic affords a particularly easy use of the coding method. Indeed, the allocation of the same predetermined unit width for the bars with the first reflection factor and those with the second factor is an additional simplifying factor in the use of the method according to the invention. In this way, it is found that one of the aims of the present invention, namely the simplicity of use, is achieved, which is not the case with other coding systems mentioned above.

The coding method according to the invention also has a particularly high degree of security, because of the fact that the binary coding of the information is performed in m bits (seven in a preferred embodiment). This makes it possible, at the end of the reading, and as detailed below, easily to check the presence or absence of a bit, by carrying out a modulo m counting of the data bits recognised.

In this preferred embodiment, the binary words representing information are framed between a binary word representing the start and a binary word representing the end of the bar code, with predetermined structures. Such arrangements make it possible to limit reading errors to an even greater extent, whilst giving the logic a simple means of determining the start and end of the complex word coded in bar code form.

Advantageously, in the preferred embodiment, when the information to be transmitted consists essentially of series of figures, there are allocated, to the latter, binary words whose transcription in bar code form, in accordance with the method set out above, is the shortest possible, whilst the other binary words are allocated to the letters. By means of this arrangement, the density of coded characters is increased still further when the latter consists of figures. This arrangement is particularly advantageous in the application of the invention to the field of facsimile transmission.

Another object of the present invention is a device for coding in accordance with the method defined above. According to this aspect of the invention, the device is characterised in that, in order to enable it to generate codes according to the method defined above, it includes a central unit suitable for executing programs loaded in memory means, means enabling a user to enter characters intended to be coded, means suitable for representing bar codes graphically, and memory means in which in particular a program implementing the steps defined by the above coding method is loaded.

Another object of the present invention is a method of reading information coded in bar code form by means of the method defined above, characterised in that it consists, in an initial cycle, of:

- determining the unit width of the bars with the first and second reflection factors by measuring the time elapsed during scanning, with means for the optical reading of information coded in bar code form, between two successive factor transitions for a series of bars of identical width and equal to a predetermined multiple of the said unit width;
- storing the unit width thus determined;
- storing the logic state corresponding to the reflection factor of the bar measured lastly; and
- updating the unit width as a function of the actual width measured during the measurement of the width of each of the bars in the said series of bars.

In a preferred embodiment, the reading method also includes an iterative decoding cycle consisting, after the measurement of the width of the last two bars in the said series, of:

- comparing the width equivalent to the scanning time of the subsequent bar with the same reflection factor which gave rise to the determination of the unit width with predetermined, so-called "threshold" multiples of the unit width.

These arrangements advantageously afford a reliable decoding of the bar codes coded in accordance with the method according to the present invention.

Another object of the present invention is a device for reading bar codes using the reading method defined above and which includes a central unit suitable for executing programs loaded in storage means, means for receiving information coming from means for the optical reading of information coded in bar code form, means for measuring the scanning time of at least some of the bars in the code, memory means in which in particular a program implementing the steps defined by the above reading method is loaded.

Advantageously, the reading device also includes means for the optical reading of information coded in bar code form and the said means of receiving information consist of a means of connecting the device, to which the optical reading means are connected.

In addition, the devices for reading and producing bar codes may of course form part of a single device.

Other characteristics and advantages of the invention will emerge from a reading of the following description, with reference to the accompanying drawings in which:

- Figure 1 is an example of a bar code resulting from the use of a preferred embodiment of the coding method of the present invention;
- Figure 2 is a block diagram of a device for producing and reading bar codes according to the preferred embodiment;
- Figure 3 shows a simplified example of a bar code, its binary transformation, and the content of registers;
- Figures 4a and 4b show the flow chart for the bar code reading program according to the preferred embodiment of the present invention; and
- Figures 5a and 5b show the flow chart for the bar code printing program according to the preferred embodiment of the present invention.

The preferred embodiment will moreover be described with reference to Table I below.

The method of coding information in bar code form consists, in a first step, of representing each of the items of information to be coded by a so-called "simple" 7-bit binary word.

Table I below shows examples of information (in this case alphanumeric characters for the most part) to be represented in the form of bar codes and the simple binary word which has been allocated to each item of information. The allocation procedures applied by the coding method according to the preferred embodiment are given below.

The simple binary word is then expressed in bar code form, on the one hand, by representing each of the bits, in order of appearance in the binary word, by a black or white bar of a predetermined unit width depending on whether it has a binary value equal to "0" or "1".

In the present case, the value "0" is represented by a white bar, whilst the value "1" is represented by a black bar.

Moreover, in this step, a juxtaposition of two or more bits of the same binary value is represented by a single bar having the reflection factor corresponding to this value, that is to say it is black or white in colour, and having a width greater than the predetermined unit width and increasing according to the number of juxtaposed bits of the same value.

In this preferred embodiment, the unit width of a bar, whether black or white, is approximately 200 $\mu$m, 210 $\mu$m in the embodiment chosen and depicted. As for the greater width, this is an actual multiple, in this case equal to one, of $2^n$ times the predetermined unit width, n being equal to the number of juxtaposed bits.

Thus, for example, a bar representing the juxtaposition of three bits of the same binary value will have a width equal to eight times the predetermined unit width.

In this way, representing a bar by the letter "b" or "n", in accordance with its respective colour, white or black, preceded by the letter "L" indicating the unit width or the term "$2^nL$" if its width is a multiple equal to $2^n$ times the unit width "L", a binary word such as "0101101" will be represented as follows:

$$0101101 = Lb \ Ln \ Lb \ 2^2Ln \ Lb \ Ln$$

The width of a bar code representing this binary word corresponding to the figure "3" in Table I will therefore in total be equal to nine times the unit width "L".

Likewise, the binary word "1010001", which is the binary representation of the letter "W" in Table I, will be represented as follows:

$$1010001 = Ln \ Lb \ Ln \ 2^3Lb \ Ln.$$

According to another characteristic of the preferred embodiment, when several items of information have to be coded on the same bar code, the simple binary words each representing items of information are juxtaposed in order to form a single so-called "complex" binary word, each complex binary word being expressed as a bar code in the same way as the simple binary words.

Thus, if it is desired to express, in the form of a bar code, the sequence of two items of information represented respectively by the simple binary words "0101110" and "0101101", this will result in expression in the form of a bar code of the complex word "01011100101101", in the same way as a simple binary word. This means that the bar code representing the above two simple binary words will have the following structure, adopting the above symbolic representation:

$$01011100101101 = Lb \ Ln \ Lb \ 2^3Ln \ 2^2Lb \ Ln \ Lb \ 2^2Ln \ Lb \ Ln$$

As can be seen here, the two simple binary words have been merged into a complex binary word which is the simple juxtaposition of these two simple binary words. It is therefore not necessary to present in bar code form any space between two binary words representing information, a separation between two successive items of information to be expressed in bar code form which was generally followed by the methods of the prior art.

This of course reduces the width of the result bar code to a considerable extent. The complexity of the decoding interfaces for this type of bar code is also reduced compared with those known in the prior art.

According to two other advantageous characteristics of the preferred mode of implementing the invention described here, amongst the binary words of seven possible bits:

- only the simple binary words which do not contain a sequence of more than four bits of the same value are retained; and
- only the simple binary words which do not begin and/or end in a sequence of more than two bits of the same value are retained, so that neither the simple binary words nor the complex binary words resulting from the juxtaposition of these simple binary words include a sequence of more than four bits of the same value.

Indeed, because the juxtaposition of two or more bits of the same value is represented by a single bar, the width of which is a multiple, in this case a whole multiple, of the unit or basic predetermined width, it is advantageous, within the scope of the aim of the present invention, and if it is not necessary to have available all the binary words which can be achieved with seven bits, to limit the juxtaposition of bits of the same value to the maximum possible extent.

It will be noted that, in other variants, the first characteristic may be used alone.

From this selection there remain the simple binary words appearing in the "binary word usable" column in Table I.

It will be observed that, by virtue of the previous two characteristics, the widest bar obtained by means of the coding method according to the preferred embodiment is 16 times the unit width.

If, in addition, it proves that, within the framework of a given application, the number of items of information to be coded is less than the number of simple binary words which can be used, it is possible to remove additional binary words from the list of binary words usable which has just been established.

As a corollary to the application of the two selection steps which have just been mentioned, simple binary words having four bits of the same value and those beginning and/or ending with two bits of the same value will be removed initially, commencing of course with those with the most unfavourable characteristics, that is to say those leading to the longest bar codes.

In the present preferred embodiment, this thereby gives the selection presented in the "binary word used" column, the binary word used having a cross in the corresponding box.

The "associated character" column in Table I indicates which information to be coded was allocated to the corresponding binary word used.

The information to be coded is in this case the letters of the alphabet, figures 0 to 9 and two common symbols ("/" and space).

As can also be seen in Table I below, two items of information relating to the size of the characters, upper or lower case, have also been associated with two binary words. Thus, if it is desired to represent a lower case letter in bar code form, it will suffice, using the coding method according to the preferred embodiment, to represent in bar code form the sequence or juxtaposition of simple binary words relating on the one hand to the simple word concerning the change to lower case and on the other hand the simple binary word relating to the letter chosen. Return to the coding of upper-case letters will be effected by coding, after the letter to be coded in lower case, the simple binary word relating to upper-case characters, this type of character being chosen by default.

After the implementation of these selection steps, the simple binary words leading to the shortest bar codes were also, at the time of the binary representation of the information to be coded, allocated to the items of information which are statistically the most frequently used.

In the present case, if reference is made to Table I, it will be noted that the order of preference is figures, then vowels and then consonants.

This proves particularly advantageous in an application where figures are the most frequently used, and particularly in the field of facsimile transmission where these are used for making up the fax numbers of the addressees of the faxes.

By thus giving preference to the shortest bar codes, the risk of reading errors is reduced to the maximum possible extent.

According now to a particularly advantageous additional characteristic of the preferred embodiment, a simple binary word referred to as the "start of bar code" word and a simple binary word referred to as the "end of bar code" word framing the said binary word representing the item or items of information are juxtaposed with the binary word representing the item or items of information to be coded (a simple or complex binary word respectively), and the complex binary word thereby obtained is expressed as a bar code.

These start and end words, which are different in length from the simple binary words, are used to enable a bar-code reader to recognise the start and end of a bar code. Each of these words is in the form of a complex word of two simple binary words, the first of which is a common simple binary word which has been referred to as "function" in Table I below. The other seven bits of the start and end words are respectively represented by the simple binary word "2" and the simple binary word "0" in this same Table I.

The alternation of "0" and "1" enables the bar-code reader, as described below, to determine the unit width of each bar, black or white, and to recognise the start of the representation of the information proper after this alternation.

In addition, as also described below, a modulo 7 counting of the decoded bits of the bar code makes it possible to locate any error in reading and/or decoding in the coded information, since all the characters are coded in seven bits.

In addition, the differentiation between the start word and the end word enables the direction of reading (left to right or vice versa) of the bar code to be recognised. It will also be observed, referring to Table I, that the binary word called "function" and the binary word "0" have respectively at their start and end the binary value "1".

Every bar code thus expressed by means of the method according to the preferred embodiment thus has a black bar at its start and end. In this way any problem resulting from the non- reading of a white bar at the start or end of a bar code is avoided.

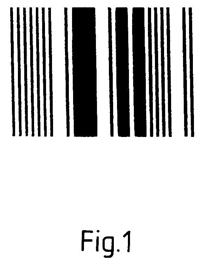

A bar code produced in this way, by means of the coding method according to the preferred embodiment, is shown in Figure 1. Here the sequence of alphanumeric characters "H" and "3" has been shown in bar code form. This bar code corresponds, having regard to the start and end words of a bar code, to the graphic representation of the following sequence of bits:

1010101010101001011100101101101010101010100101

Other variants of this coding method, within the ability of experts, can of course be envisaged.

In particular, the predetermined unit width for a bar having a given reflection factor may be different from that of a bar having a second reflection factor.

The widths of bars representing a juxtaposition of bits may also be determined in other ways.

Moreover, the preferred embodiment relates to the coding of essentially alphanumeric characters, but any other information could be coded.

Advantageously, the coded information, and more particularly the alphanumeric characters of the preferred embodiment, may be used for controlling office machinery such as facsimile machines.

The start of bar code word may, in a variant, carry one or more items of information other than the indication of the start of a bar code and the information to be coded in bar code form, keeping however a minimum alternation of "0" and "1" so that the word can fulfil its functions mentioned above.

Also as a variant, the simple binary word referred to as "function" in Table I may be used in juxtaposition with another simple binary word, other than "0" and "2" (already used for the start and end of bar code words), to produce complex words, the meaning of which, from the information point of view, is different from that of the corresponding simple binary word alone.

These variants of course also contribute to increasing the density of information stored on a bar code.

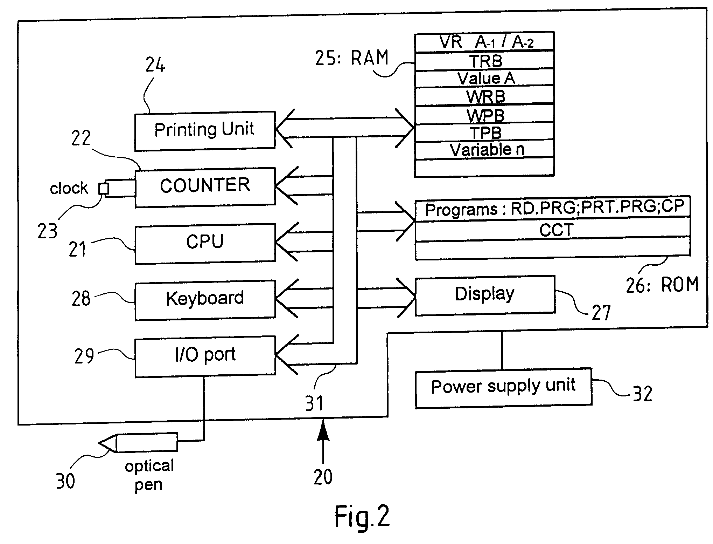

A preferred embodiment of a bar code reading and generating device using the coding method which has just been described will now be described with the help of Figure 2.

The device is illustrated in the form of a block diagram in Figure 2 and depicted under the general reference numeral 20. It includes a central processing unit 21, a counter 22 associated with a clock 23, a printing unit 24, a RAM 25, a program memory of the ROM type 26, a screen 27 and a keyboard 28. The components 21-28 are connected together by means of an address and data bus 31. The RAM 25 and ROM 26 in this case constitute the memory means defined above.

The device also includes an input/output port 29, also connected to the data and address bus 31, and to an optical reading means 30, suitable for reading bar codes and, in the environments concerned, referred to as an "optical pen". The "input" part of the input/output port 29 therefore constitutes in this case a means of receiving information from the optical pen 30.

In this embodiment, a power suplly 32 is also provided for delivering current to the whole device 20 and optical pen 30.

All the components which have just been described are of conventional structure and as such are well known to experts. In particular, the printing unit 24 can be chosen from amongst any printing devices capable of printing graphical characters, and in particular bars of predetermined thickness. In the embodiment illustrated here, the printing unit 24 is a printing unit of the same type as that used in facsimile machines.

Other means suitable for graphically representing bar codes may of course also be appropriate, instead of the printing unit 24.

The optical pen 30 is, in this embodiment, an optical pen sold by the company DATALOGIC under the trade name "P 40", which translates the bar code into logic signals. A logic "1" state is delivered for a black bar and a logic "0" state is delivered for a white bar. Its resolution is 150 µm. These logic signals are transmitted to the input/output port 29 to which it is connected. Other means for the optical reading of information coded in bar code form may obviously be suitable.

The other components illustrated in Figure 2 are of commercial structure and will therefore not be described in more detail here, since experts can easily use them in a device according to the diagram in Figure 2.

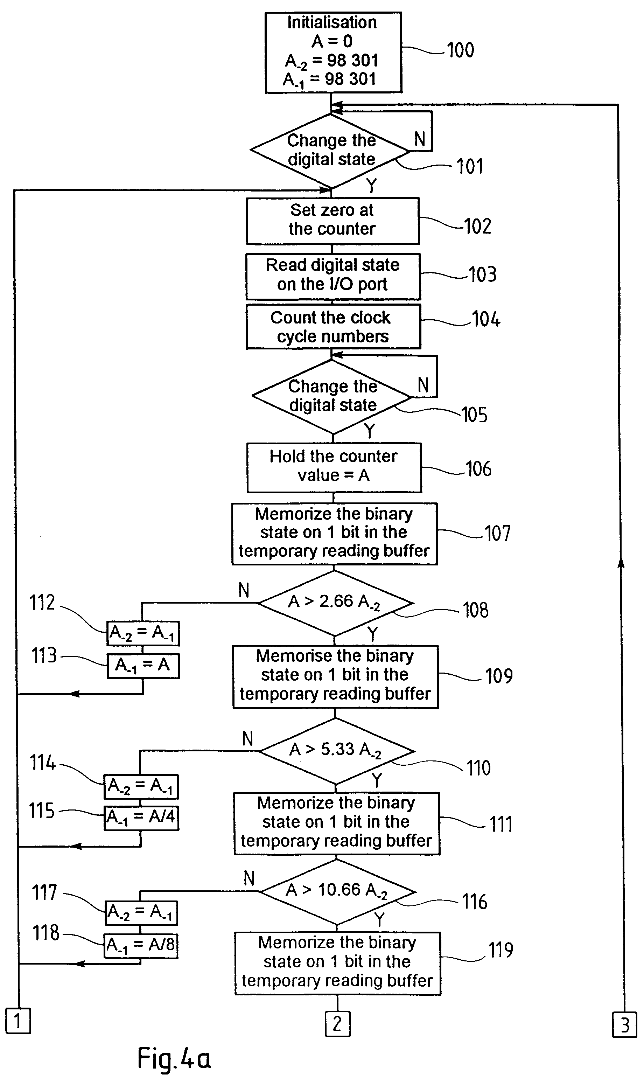

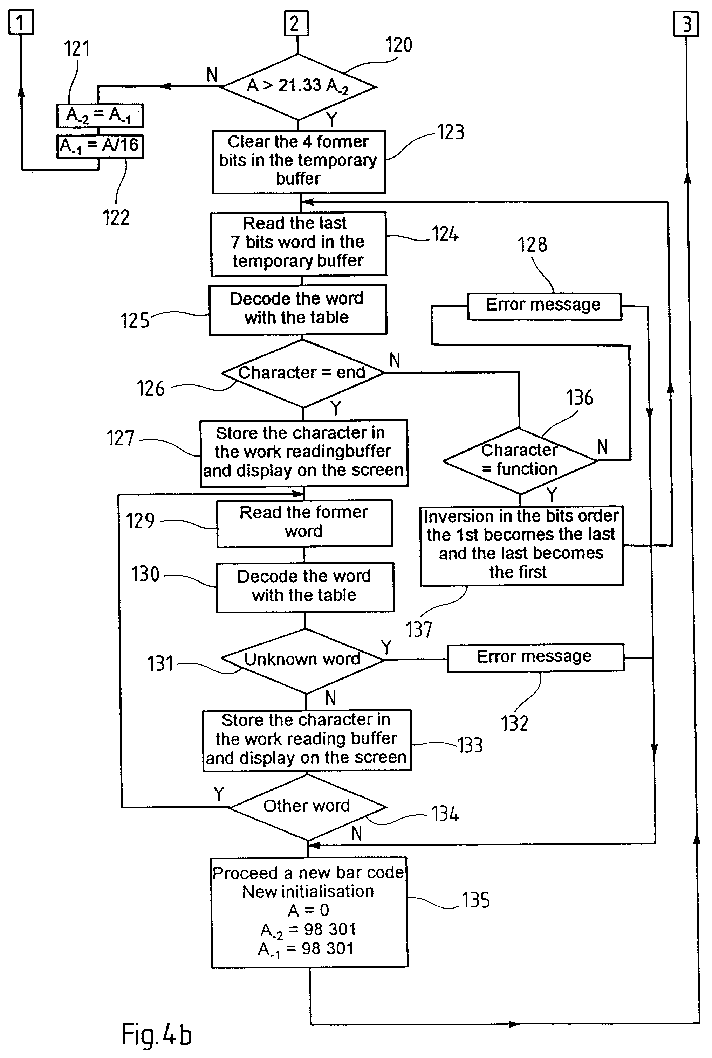

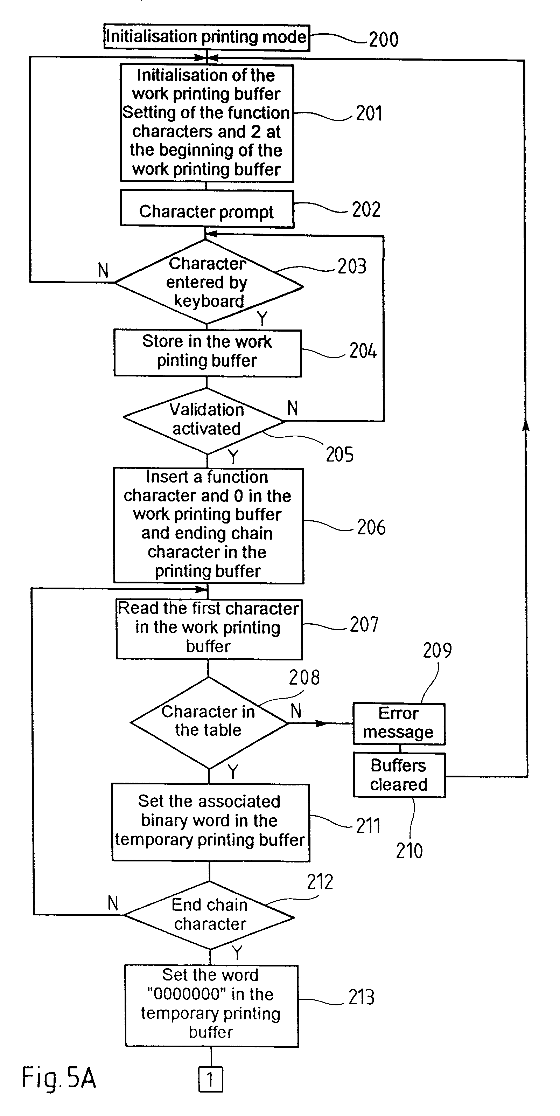

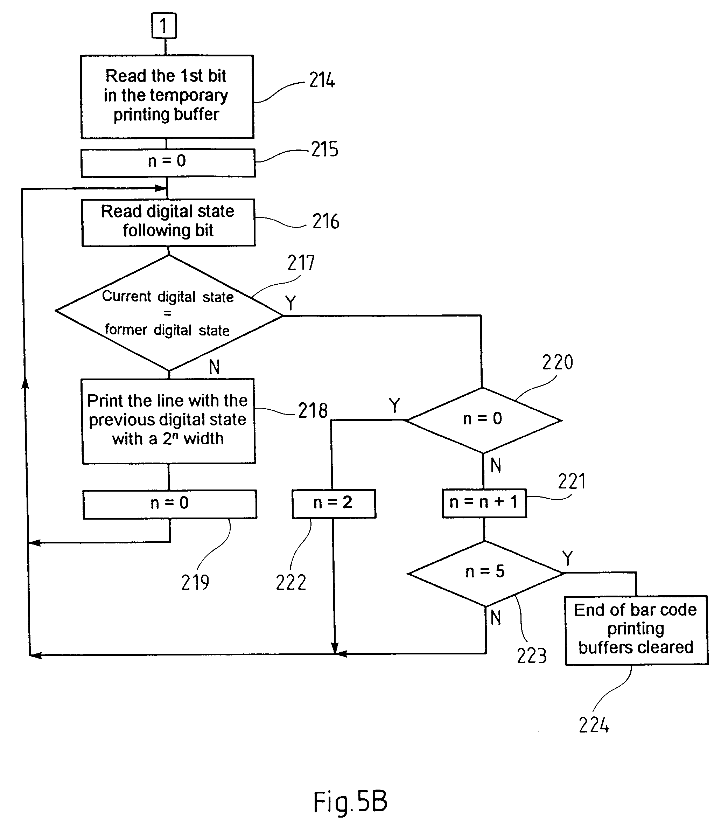

The program memory 26 has inter alia a program (RD.PRG) designed to allow reading of bar codes produced in accordance with the coding method according to the present invention. The flow chart for this program is illustrated in Figures 4a and 4b. In the program memory 26 there is also loaded a program (PRT.PRG) enabling the device to represent graphically, in this case to print, at the output from the printing unit 24, bar codes produced in accordance with the method according to the present invention and representing series of characters entered by means of the keyboard 28. The flow chart for the printing program is illustrated in Figures 5a and 5b.

The RAM 25 includes various registers and in particular several buffer registers which will be described later, when the decoding and printing programs are described.

In addition, the keyboard 28 has a key referred to as the "mode" key, the actuation of which is detected by the central unit 21 and which enables the device to change from a so-called "reading" mode to a so-called "printing" mode and vice versa, the central unit positioning itself on the "initialisation" sub-program for the "reading" mode (box 100, Figure 4a) or for the "printing" mode (box 200, Figure 5a).

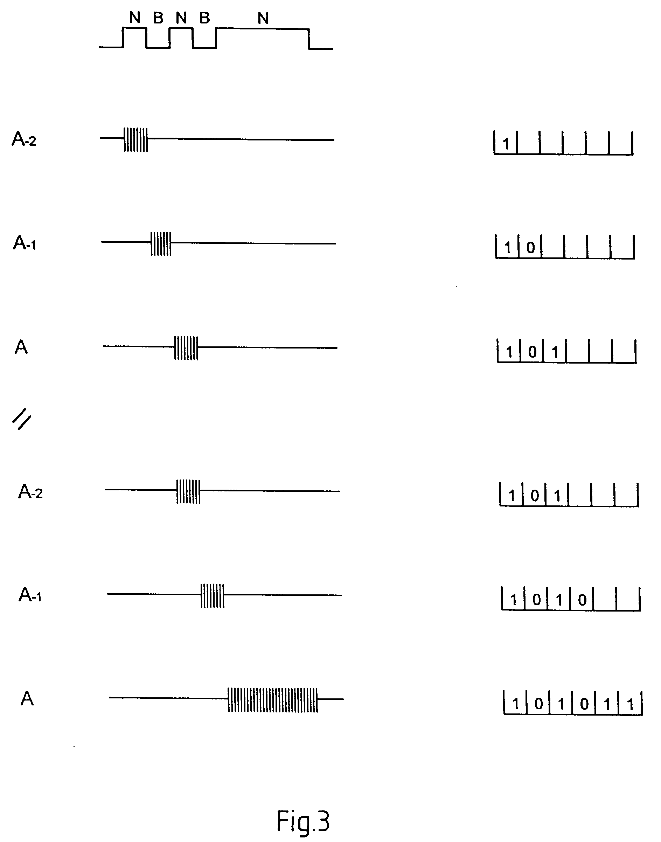

The reading method as used in the device for reading and generating bar codes described with the help of Figure 2 will now be described with the help of Figures 3, 4a and 4b.

It should first of all be stated that here the word "reading" means physical reading using the optical pen 30 and/or the reading of logic states at the input/output port 29 as well as the subsequent decoding.

In general terms, the reading method consists of:

- determining the unit width of the white and black bars by measuring the time elapsed during scanning with the optical pen between two successive colour transitions for a series of bars of identical width and equal to a predetermined multiple of the said unit width;
- storing the unit width thus determined;
- comparing the width equivalent to the time of scanning the subsequent bar of the same colour as the bar which gave rise to the determination of the unit width with predetermined, so-called "threshold" multiples of this unit width;
- storing the logic state corresponding to the colour of the bar measured last; and
- updating the unit width as a function of the actual width measured.

In the use of the method, the inventors were confronted with the following difficulty.

When use is made of printing devices similar to those used in the printers available on the market (such as laser or inkjet), it proves to be very difficult to print black and white bars of identical width, especially when it is desired to print very narrow bars (around 2/10ths of a millimetre, for example). In fact, in practice, the black bars have an appreciably greater width than the white bars. Thus, in order to determine the unit width of the white or black bars, in accordance with the method according to the invention as set out above, the inventors chose to make a comparison of the scanning times for the bars of each of the colours.

Figure 3, with the assistance of an example, gives a better understanding of this aspect of the reading method of the invention.

It should be stated first of all that, in accordance with another characteristic of the invention advantageously used in the coding method described above, a binary word representing the item or items of information to be coded, a start of bar code binary word and an end of bar code binary word are juxtaposed. Advantageously, these binary words essentially include an alternation of "1" and "0", so that the bar code has, at its start and at its end, an alternation of white bars and black bars of identical width. Table I shows that the end word terminates in a "1" preceded by a "0" and a "1", whilst the start word is preceded by the function word, which begins with a "1" followed by a succession of "0" and "1" (seven in this case). Consequently, every bar code, according to the preferred embodiment of the coding method, has at its start or at its end at least one series of three bits "1", "0", "1", so that, whatever the direction of reading employed by the user of the optical pen, the optical pen detects, in both cases, the said series of three bits "1", "0", "1".

This characteristic uses the aspect of the reading method in accordance with the invention according to which, for determining the unit width of the white or black bars, a measurement is made of the time elapsed during scanning between two successive transitions of a colour for a series of bars of identical width and equal to a predetermined multiple of the said unit width.

In this embodiment, the predetermined multiple is equal to 1 and the unit width is the width corresponding to one bit.

In the embodiment chosen and depicted in Figure 3, a bar code having various series of black (N) and white (B) bars has been depicted schematically, in order to give a better understanding of this aspect of the invention. The series of black and white bars has on the one hand four alternately black and white bars, of unit width, and a black bar having a width equal to four times the unit width. This bar code therefore represents the binary value "101011".

It can be seen that, in accordance with the aspect of the invention presently described, the first three bars constitute a series of bars of identical width and equal to a predetermined multiple (1 in this case) of the unit width.

In this embodiment, the unit width is measured by measuring the scanning time. A measurement of the scanning time is made by means of the clock 23 associated with the counter 22. When the reading commences, that is to say when the user scans, in this example from left to right, the bar code illustrated at the top of Figure 3, the counter counts clock cycles (of a value of 1 MHz).

The widths of the black and white bars thus measured are successively fed into two value registers of the RAM 25, referred to for convenience as $A_{-2}$ and $A_{-1}$ (VR $A_{-1}/A_{-2}$ on figure 2).

The iterative measurement process will now be described with the assistance of Figures 4a and 4b.

These figures depict the flowchart of the program (RD.PRG) controlling the reading operations.

In boxes 100 and 135, the first of which concerns the initialisation of the reading process when the machine is started up, and the second of which concerns an initialisation which takes place between the reading of two different bar codes, a value corresponding to the maximum counting value of the counter 22 is recorded in the registers $A_{-1}$ and $A_{-2}$ (in this case the value 98301).

During the reading, that is to say during the scanning of the bar code such as the one in Figure 3, a first white-black transition is detected by the optical pen 30. In fact, before the reading of the first black bar, the optical pen 30 transmits the logic "0" state, which is read by the central unit 21 through the input/output port 29.

At the time of this first white-black transition (the first black bar on the left in Figure 3), the counter 22 is reset to zero (box 102). The logic state at the input/output port is then read (in this case the logic "1" state) (box 103).

The counter 22 then counts (box 104) the number of clock cycles which have been completed since the change of logic state, until the following change of logic state detected during the test 105. As long as the optical pen does not detect a further change of colour (in the present case the transition from black to white between the first black bar and the first white bar), counting continues (negative branch of the test 105).

The counter 22 is stopped (box 106) at the time of detection of the change of logic state by the optical pen 30 (in this case the detection of the first white bar).

The value on the counter is read by the central unit 21 and stored in the RAM 25. The test 108 is then carried out, in the course of which a check is made whether the value A of the counter, which has just been stored in the RAM, is greater than a predetermined multiple of a unit width normally stored in the register $A_{-2}$.

When a reading cycle starts, the value stored in the register $A_{-2}$ is high and the test 108 is negative. The value present in the register $A_{-1}$ is then recorded in the register $A_{-2}$ (box 112), and then, box 113, the current value A of the counter 22 (as provisionally recorded in the RAM 25) is recorded in the register $A_{-1}$. The counter 22 is then reset (box 102).

The process then continues when the first white bar in Figure 3 is scanned by the optical pen 30. When the counter stops (box 106), the latter has a new value A, which may be identical to the value A which was previously measured, lower in the case where the user has speeded up his scanning (the most probable case), or higher in the (improbable) case where the user has slowed down his scanning at the start of a reading cycle. The new value of the counter A is compared with the same multiple of the unit width value normally recorded in the register $A_{-2}$. As the latter still has a very high value, the test 108 also proves negative and the operations of boxes 112 and 113 are carried out in the same way as for the cycle previously described. It is then seen that the counting value measured at the time of the scanning of the first black bar is present in the register $A_{-2}$.

The counter is then once again reset (box 102) and, at the time of scanning of the second black bar, the counting of the clock cycles representing the width of this (box 103-106) is carried out.

A comparison is then made between the current measured value of the second black bar with a predetermined multiple of the measured width of the first black bar. In this case, the test 108 should be negative since, as illustrated in Figure 3, the second black bar has a width identical to that of the first black bar.

The operations 112 and 113 are once again carried out and it is seen that a value representing the width of the first white bar is then present in the register $A_{-2}$.

In parallel with the three cycles which have just been described, the logic state read by the optical pen is on each occasion recorded, in one bit, in a temporary reading buffer (TRB on figure 2) in the RAM 25 (box 107). These operations are shown diagrammatically in the right-hand part of Figure 3, which illustrates the temporary reading buffer (TRB) in the form of a register in which the logic "1" state is recorded at the time of reading of the first black bar, the logic "0" state is recorded at the time of reading of the first white bar and the logic "1" state is once again recorded at the time of reading of the second black bar.

The second white bar is then measured as described previously, its width being compared with that of the first white bar recorded in the register $A_{-2}$ (repetition of operations 102-108).

At the time of reading of the third black bar (having, as can be seen in the diagrammatic drawing in Figure 3, a width equal to four times the unit width) the test 108 proves positive. In fact, if it is assumed that the scanning speed is substantially constant, a number of clock cycles four times greater is counted at the time of scanning of the third black bar than at the time of scanning of the second black bar, which serves as a reference (in the register $A_{-2}$). A first bit of logic "1" value had been recorded (at box 107) following the test 105, when the latter had become positive at the end of scanning of the third black bar illustrated in Figure 3. Following the test carried out at box 108, a second bit of value 1 is recorded in the temporary reading buffer (TRB), as provided for at box 109.

It can be seen that the function of the test 108 is to distinguish the bars with a unit width from those liable to have a width equal to at least 2.66 times the unit width. Should the test 108 prove positive, and subsequently to the second storage of the logic state in one bit in the temporary reading buffer (TRB), another test is carried out (box 110), during which the current value of the counter is compared with a second predetermined multiple of the unit width, the multiple in this case being 5.33. Where the test 110 proves negative, an operation 114 similar to the operation 112 is first of all carried out, the value present in the register $A_{-1}$ being transferred to the register $A_{-2}$. A value equal to one quarter of the current value (box 115) is then transferred to the register

9

$A_{-1}$.

Thus, when the test 108 is positive and the test 110 is negative, the central unit 21 knows that the optical pen has just scanned at bar with a width equal to four times the unit width. A value equal to one quarter of the measured width is stored in the register $A_{-1}$ so that, when the following bar (white in this case) is read, a width corresponding to the nominal width is recorded in the register $A_{-2}$.

Should the test 110 prove positive, the central unit 21 deduces therefrom that the bar whose width has just been measured has a width equal to at least 5.33 times the unit width. In accordance with the coding method, a third bit similar to the previous two is then recorded in the temporary reading buffer (TRB) (box 111).

If the following threshold test (box 116) proves negative, an operation 117 similar to the operation 112 is carried out, whilst in the operation 118 a value equal to one eighth of the measured width is stored in the register $A_{-1}$.

If the test 116 proves positive, this means that the measured width is greater than 10.66 times the unit width and a fourth identical bit is stored in the temporary reading buffer (TRB) (box 119).

A test 120 makes it possible to determine whether or not the width of the bar which has just been scanned is greater than 21.33 times the unit width.

If the threshold test of box 120 proves negative, an operation 121 similar to the operation 112 is carried out, whilst in the operation 122 a value equal to one sixteenth of the measured width is stored in the register $A_{-1}$, and as always with this type of operation the program returns to box 102 where the counter 22 is reset.

Where the test 120 proves positive, as there is no provision in the embodiment of the invention chosen and depicted for having more than four identical bits in succession, this means that there is a reading error or end of reading. This is the reason why the four previous bits in the temporary reading buffer (TRB) are erased at box 123.

Before describing the subsequent operations in the flow chart in Figures 4a and 4b, the reasons why the threshold multiples have been chosen to be equal to the values used in the tests 108, 110, 116 and 120 will be described below.

In the embodiment of the device chosen and depicted, the optical pen sold under the trade name "DATALOGIC" has a resolution of 150 μm. In the embodiment used, the printing unit has a resolution of 460 dpi (dots per inch: that is to say a width per dot of 70 μm). Consequently, in order to be able to use the optical pen with the bar codes printed by the printer unit, it was necessary to use an unit width of three dots, that is to say 210 μm.

It will be recalled that, in accordance with the invention, the width of the juxtaposed bars is an actual multiple, in this case equal to 1, of $2^n$ times the unit width, n being equal to the number of juxtaposed bits.

The unit width is the one corresponding to three dots (210 μm), the width for two juxtaposed bits is 12 dots, that for three juxtaposed bits is 24 dots, and that for four juxtaposed bits is 48 dots.

The decision thresholds have been placed, in this embodiment, at 8 dots, 16 dots, 32 dots and 64 dots, these decision thresholds being, in terms of dots, multiples of 2.

Thus, for the bars having four unit widths (12 dots), the lower decision threshold is fixed at 8 (that is to say 12-0.33 times 12) and the upper threshold is fixed at 16 (that is to say 12 + 0.33 times 12). The threshold constants are therefore respectively 2.66 and 5.33, corresponding to the division of 8 and 16 by 3. The constants of 10.66 (test 116) and 21.33 (test 120) are determined in the same way.

Thus the system of tests described with the assistance of Figure 4a amounts to deciding that, as soon as a width 33% less than a predetermined width of higher rank is measured, the logic decides that the bar read has the width of lower rank.

The inventors considered that a margin of 33% is sufficient and in this way makes it possible to "absorb" any variations in the reading speed. Thus it is observed that the coding and reading methods in accordance with the present invention allow an easier use of the optical pen, since the user is not obliged to pay any attention to the consistency of his scanning speed, unlike the prior art. In other words, the coding and reading methods allow a more reliable reading of the bar codes by means of an optical pen.

Steps 124 et seq then make it possible to decode the bar code read, with reference to Table I or character conversion table (CCT on figure 2) stored in ROM 26.

This decoding commences with the reading of the last 7-bit word in the temporary reading buffer (TRB) (box 124) and then the decoding of this word with reference to Table I recorded in the ROM 26 (box 125). The test 126 consists of determining whether this 7-bit word corresponds to the end of bar code character (0100101, see Table I).

If the test 126 is negative, the following test (136) checks whether the last 7-bit word present in the temporary reading buffer (TRB) is a character referred to as a function character in Table I (1010101). If not, an error message is displaced on the screen 27 (box 128). Two successive tests 126 and 136 with a negative result shows that the bar code has not been properly read. A further initialisation is then carried out (box 135), so that the process described above can recommence.

If the test 136 is positive, this means that the reading has been carried out in reverse, the first bit read in reality being the last one in the code and vice versa. The order of the bits in the temporary reading buffer (TRB) is then reversed, box 137, and the program is switched to box 124.

If test 126 is positive, this means firstly that the last seven-bit word in the temporary reading buffer (TRB), also called temporary buffer corresponds to the end of bar code character and secondly that there has been no reading error.

It can be seen that the test 126 is particularly advantageous. In fact, if during reading a bar of width equal to a multiple of the unit width is not decoded as such, for example because of a significant variation in the scanning speed of the optical pen, this means that, in the temporary reading buffer (TRB), one bit too many will have been recorded or on the other hand one bit will be missing. For example, a juxtaposition of three "1" will be recorded instead of a juxtaposition of two "1" or vice versa. Under these circumstances, the end of bar code character is not recognised during the test 126. The operations described above (boxes 128, 136 and 137) then take place. On the other hand, if the end of bar code character is recognised, this means that there has been no reading error of the above-mentioned type.

The "end" character is then stored, box 127, in a working reading buffer (WRB on figure 2), also called work reading buffer, provided in the RAM 25 and it is displayed on the screen 27.

The word preceding the word known at the previous step is then read. This word is compared with the table shown in Table I and decoded (boxes 129 and 130).

During this decoding the test 131 is carried out, the purpose of which is to determine whether the word is unknown, in which case an error message is displayed on the screen 27 (box 132), or whether it is known, in which case the corresponding character is stored in the above-mentioned working reading buffer (WRB) and displayed on the screen 27 (box 133).

The test 134 is then carried out, the purpose of which is to determine whether the temporary reading buffer (TRB) includes another seven-bit word. If so, the program is switched to above box 129 and the operations which have just been described are recommenced. If not, this means that the reading of the bar code is terminated. A further initialisation is carried out, notably by recording the maximum counting value of the counter 22 in the registers $A_{-2}$ and $A_{-1}$ (box 135).

In addition, the presence of a word of less than seven bits detected by the test 131 means that there has been a reading error and in particular an error in measuring the width of a bar of great width resulting in the loss of a bit or, on the other hand, the gain of a bit. The operations 129-134 with the test 131 in fact perform in this case a modulo 7 counting of the bits present in the temporary reading buffer (TRB). The simple presence of a final word (after decoding of the other words) having less than seven bits suffices to trigger the error message 132.

The device is then ready for the reading of a new bar code.

A preferred embodiment of a method of printing a bar code according to the invention will now be described with the assistance of Figures 5a and 5b.

In this embodiment, this method is used in the device which has been described with the assistance of Figure 2. A program corresponding to the flowchart which will be described is loaded in the ROM 26 and is used by the central unit 21. The central unit 21 controls the printer unit 24 by means of conventional dedicated control programs (CP on figure 2) loaded in the ROM 26.

When changing to "printing" mode, the program first of all goes to box 200, which corresponds to an initialisation sub-program. This initialisation consists of activating the components required for printing, in this case a printing unit 24. This activation is effected by means of the control programs (CP) for the printing unit, of conventional structure and loaded in the ROM 26.

The program then goes to box 201. There is a working printing buffer register, also called work printing buffer (WPB on figure 2), in the RAM 25. A "function" character and the character "2" are recorded in this register.

The program then actuates the display of a message inviting the entry of a character (box 202). This message is displayed on the screen 27 and the user types the required character on the keyboard 28.

At box 203, a test is carried out for the purpose of determining whether a character has been typed on one of the keys of the keyboard.

If not, the program goes to box 201 and the message inviting the entry of a character remains displayed.

As soon as a character is typed on the keyboard, it is stored in the working printing buffer register (WPB) (box 204). This character is stored at the end of the characters already stored previously.

A test is then carried out, at box 205, for the purpose of determining whether a validation key is then typed on the keyboard (in this case the "enter" key). If not, the program goes to the test 203 and the following character can be entered on the keyboard by the user, whilst the message inviting the entry of a character remains displayed on the screen.

After the validation key has been typed (test 205 positive), the program actuates the insertion of three characters: "function", "zero" and "end of chain" (box 206). The "end of chain" character enables the end of a chain of characters to be defined. It is for example represented by the symbol "\0" in the case of C language.

At the end of this operation, the working printing register (WPB) includes the series of characters corresponding to the bar code which the user desires to print.

Then, at steps 207-212, the characters contained in the working printing buffer register (WPB) are transformed into a binary word, by comparison with the characters in the conversion table appearing below in Table I.

At box 207, the character following the last character converted in the working printing buffer register (WPB) is read. At the start of the chain, this is the first character in this register, namely the "function" character.

A test is then carried out, at box 208, for the purpose of finding out whether or not the character read appears in the character conversion table (CCT) (Table I above).

If test 208 is positive, the binary word associated with the character read is recorded in a temporary printing buffer register, also called temporary printing buffer (TPB on Figure 2) of the RAM 25 (box 211).

If the test 208 is negative, the program actuates the display of an error message on the screen (box 209). In addition, the working printing buffer register (WPB) and temporary printing buffer register (TPB) are cleared (box 210). The program then goes to box 201.

As long as the "end of chain" character is not recognised (negative branch of test 212), the program goes to box 207. When the "end of chain" character is recognised, this means that all the characters contained in the working printing buffer register (WPB) have been read.

The program then goes to box 213. At this step, a binary word "0000000" is recorded in the temporary printing register (TPB). The reason for this step will become clear later in the description.

At box 214, the logic state of the first bit in the temporary printing buffer register (TPB) is read.

A variable n stored in the RAM 25 is set to zero in the following step (box 215).

A double loop is then made, with the purpose of determining whether or not a series of bits with an identical logic state is present, with a view to allowing the printing of bars of corresponding width (boxes 216-223).

In this loop, a bit logic state following the logic state previously read is first of all read (box 216).

At 217, a test is carried out to determine whether or not the current logic state (that is to say the logic state read at box 216) is equal to the previous logic state (that is to say that of the bit previously read). If not, the printing of a line with a reflection factor corresponding to the previous logic state of width equal to $2^n$ times the unit width is then actuated (box 218).

At box 219, the variable n is set to zero and the program goes to box 216.

Should the test 217 be positive, a test 220 is then carried out to discover whether or not the current variable n is equal to zero.

If the test 220 is positive, that is to say if the variable n is equal to zero, the latter is set to the value 2 (box 222). This action takes into account the fact that, at the time of the test 217, it was determined that the previously read bit and the current bit had the same logic value; there are therefore at least two consecutive bits having the same logic value.

The variable n having been set to the value "2", the following bit is once again read at box 216. If the test 217 once again proves positive, the test 220 is again carried out. However, as the variable n has previously been set to 2, the test 220 proves negative. The value of n is then incremented by one unit (box 221).

When the test 220 proves negative for the first time, this means therefore that there are at least three consecutive bits having the same logic state.

The test 223 is then carried out. It should be stated here that, in accordance with the preferred embodiment of the present invention, the characters are coded so that there are no more than four consecutive bits having the same logic state. If the test is 223 is negative, this means that, in the temporary printing buffer (TPB), there are either three or four consecutive bits having the same logic state. The following bit it then read at box 216, which may lead to a further incrementation of the variable n by one unit.

At the third incrementation of the variable n, the test 223 proves positive. This means that the binary word read in the temporary printing buffer register (TPB) is the word "0000000" introduced into the latter at step 213. In such a case, the central unit knows that it has read the last significant bit recorded in the temporary printing buffer register (TPB) and that the last line of the bar code has been printed.

In this respect it will be noted that the printing of the line corresponding to the previous logic state of width $2^n$ referred to at box 218, makes it possible in particular to carry out the printing of lines of a width equal to 8 times or 16 times the unit width. When there are three consecutive bits of the same value, the test 217 is positive whilst the tests 220 and 223 are negative. The program then automatically goes to box 216. However, the following bit has a different logic state from the three previous ones, which results in the test 217 being negative and consequently to printing being actuated by the program, when the latter is at box 218. The same applies when, after a series of four bits having the same logic state, there is a new colour transition detected by the test 217.

When the test 223 is positive, the program goes to box 224 and actuates the erasure of the working printing buffer register (WPB) and temporary printing buffer register (TPB).

Naturally the present invention is in no way limited to the embodiments described in relation to the figures but, quite on the contrary, embraces all variants within the ability of persons skilled in the art.

In particular, from the above information, an expert is also able to produce a simple coding device or interface which will be connected on the one hand to means enabling the user to enter characters intended to be coded, such as a keyboard of the type shown under the reference 28 in Figure 2, and on the other hand to means suitable for representing bar codes graphically, which may for example consist of the printing unit 24 in Figure 2.

Such a coding interface includes, arranged as illustrated in Figure 2, a central unit (such as the unit 21) suitable for executing programs loaded into memory means (such as the ROM 26), means for entering characters intended to be coded (such as input/output port comparable to the one bearing the reference 29 in Figure 2, a socket or any other means of connection known to experts, making it possible for example to connect the aforesaid keyboard), means designed to deliver the coded information (in this case once again such as the input/output port or any other equivalent connection means) to means suitable for representing bar codes graphically (such as the printing unit 24), and memory means (such as the ROM 26) in which is loaded in particular the program implementing the steps of the coding method defined above.

In a similar manner, from the above information, experts will also be able to produce a simple device or interface for reading bar codes coded in accordance with the coding method defined above and including, arranged as illustrated in Figure 2, a central unit (such as the unit 21) suitable for executing programs loaded into memory means (such as the ROM 26), means for receiving information coming from means for the optical reading of information coded in bar code form (of the type such as respectively the input/output port 29 and optical pen 30), means for measuring the scanning time of at least some of the code bars (such as the counter 22 and clock 23) and memory means (such as the ROM 26) in which is loaded in particular the program implementing the steps of the reading method defined above.

In addition, in other embodiments, it will be possible, in addition to the display of the decoded information on the screen 26, or even in place of this display, to recover decoded information at the input/output port 29, for example to control a remote terminal, with regard to its functioning. Such a terminal may for example be represented by the facsimile machine which is the subject of the above-mentioned French patent application No 93.10352.

TABLE I

| Binary word usable | Binary word used | Associated character |
|---|---|---|
| 0010001 | | |
| 0010010 | | |
| 0010011 | | |
| 0010100 | | |
| 0010101 | | |
| 0010110 | | |
| 0011011 | | |
| 0011100 | | |
| 0011101 | | |
| 0011110 | | |
| 0100001 | X | / |
| 0100010 | X | B |
| 0100011 | X | C |
| 0100100 | X | D |
| 0100101 | X | 0/end |
| 0100110 | X | 9 |
| 0101001 | X | 1 |
| 0101010 | X | 2/start |
| 0101011 | X | F |
| 0101100 | X | G |
| 0101101 | X | 3 |
| 101110 | X | H |
| 0110001 | X | J |
| 0110010 | X | A |
| 0110011 | X | K |
| 0110100 | X | L |
| 0110101 | X | 4 |
| 0110110 | X | E |
| 0111001 | X | M |
| 0111010 | X | N |
| 0111011 | X | P |
| 0111100 | | |
| 0111101 | | |
| 1101110 | | |

TABLE 1 (Continued)

| Binary word usable | Binary word used | Associated character |
|---|---|---|
| 1000010 | | |
| 1000011 | | |
| 1000101 | X | Q |
| 1000110 | X | R |
| 1001001 | X | 1 |
| 1001010 | X | 5 |
| 1001011 | X | S |
| 1001100 | X | T |
| 1001101 | X | O |
| 1001110 | X | V |
| 1010001 | X | W |
| 1010010 | X | 6 |
| 1010011 | X | X |
| 1010100 | X | Y |
| 1010101 | X | function |
| 1010110 | X | 7 |
| 1011001 | X | U |
| 1011010 | X | 8 |
| 1011011 | X | Z |
| 1011100 | X | upper case |
| 1011101 | X | lower case |
| 1011110 | X | space |
| 1100001 | | |
| 1100010 | | |
| 1100011 | | |
| 1100100 | | |
| 1100101 | | |
| 1100110 | | |
| 1101001 | | |
| 1101010 | | |
| 1101011 | | |
| 1101100 | | |
| 1101101 | | |

**Claims**

1.  Method of coding information in bar code form, characterised in that it consists of:
    - representing each of the items of information to be coded by a so-called "simple" binary word of m bits,
    - expressing the binary word as a bar code: on the one hand by representing, in order of appearance in the binary word, each of the bits by a bar with a first or second reflection factor of a predetermined unit width depending on whether it has a binary value equal to "0" or "1"; and on the other hand by representing a juxtaposition of two or more bits of the same binary value by a single bar having a reflection factor corresponding to this value and having a width greater than the said predetermined unit width, the greater width being an actual multiple of $2^n$ times the predetermined unit width, n being equal to the number of juxtaposed bits.

2.  Method according to Claim 1, characterised in that the said actual multiple is equal to one.

3.  Method according to Claim 1 or 2, characterised in that, when several items of information must be coded on the same bar code, the binary words representing each of the said items of information are juxtaposed to form a single, so-called "complex" binary word; each complex binary word being expressed as a bar code in the same way as the simple binary words.

4.  Method according to any one of Claims 1 to 3, characterised in that the predetermined unit width is the same for the bars with the first reflection factor and those with the second factor.

5.  Method according to any one of Claims 1 to 4, characterised in that the bars with one of the two factors are white in colour whereas the others are black.

6.  Method according to any one of Claims 1 to 5, characterised in that m is equal to 7 and in that only simple binary words which do not contain a sequence of more than four bits of the same value are adopted.

7.  Method according to Claim 6, characterised in that, in addition, only the simple binary words which do not begin and/or end in a sequence of more than two bits of the same value are adopted.

8.  Method according to any one of Claims 1 to 7, characterised in that a simple, so-called "start of bar code" binary word and a simple, so-called "end of bar code" binary word are juxtaposed with the binary word representing the item or items of information to be coded, framing the said binary word representing the item or items of information, and the complex binary word thus obtained is expressed as a bar code.

9.  Method of decoding bar codes coded according to the method defined in any one of Claims 1 to 8, characterised in that, in order to determine the possible presence of a decoding error, a modulo m counting of the decoded representation of the bar code is carried out.

10. Method of reading information coded in bar code form by means of the method defined in any one of Claims 1 to 8, characterised in that, in an initial cycle, it consists of:
    - determining the unit width of the bars with the first and second reflection factors by measuring the time elapsed during scanning, with means for the optical reading of information coded in bar code form, between two successive factor transitions for a series of bars of identical width and equal to a predetermined multiple of the said unit width;
    - storing the unit width thus determined;
    - storing the logic state corresponding to the factor of the bar measured last; and
    - updating the unit width in accordance with the actual width measured during the measurement of the width of each of the bars in the said series of bars.

11. Method according to Claim 10, characterised in that it also includes an iterative decoding cycle consisting, after the measurement of the width of the last two bars in the said series, of:
    - comparing the width equivalent to the scanning time for the subsequent bar with the same reflection factor as the bar which gave rise to the determination of the unit width with predetermined, so-called "threshold" multiples of the said unit width.

**12.** Method according to either one of Claims 10 and 11, characterised in that, in order to determine the possible presence of a decoding error, a modulo m counting of the decoded representation of the bar code is carried out.

**13.** Device for reading bar codes coded in accordance with the method defined in any one of Claims 1 to 8, characterised in that it includes a central unit (21) suitable for executing programs loaded in memory means (26), means for receiving information (29) originating from means for the optical reading of information coded in bar code form, means (22, 23) for measuring the scanning time for at least some of the code bars, memory means (26) in which in particular the program implementing the steps defined in any one of Claims 10 to 12 is loaded.

**14.** Device according to Claim 13, characterised in that it also includes the means (30) for the optical reading of information coded in bar code form and in that the said means for receiving information consist of a means (29) for connecting to the device.

**15.** Device according to Claim 13 or 14, characterised in that, in order to enable it to generate bar codes coded in accordance with the method defined in any one of Claims 1 to 8, it also includes means suitable for representing bar codes graphically (24) and means (27, 28) enabling a user to enter characters intended to be coded, a program implementing the steps defined in any one of Claims 1 to 8 also being loaded in the memory means (26).

**16.** Device according to any one of Claims 13 to 15, characterised in that it also includes means (27) for displaying the decoded information.

**17.** Device according to any one of Claims 13 to 15, characterised in that it also includes means (29) intended to deliver the decoded information.

**18.** Device for coding according to the method defined in any one of Claims 1 to 8, characterised in that it includes a central unit (21) suitable for executing programs recorded in memory means (26), entry means for characters intended to be coded, means intended for delivering the coded information to means suitable for representing bar codes graphically (24), memory means (26) in which in particular a program implementing the steps defined in any one of Claims 1 to 8 is loaded.

**19.** Device according to Claim 18, characterised in that, in order to enable it to generate bar codes, it also includes means (28) enabling a user to enter characters intended to be coded and connected to the said entry means, and the said means suitable for representing bar codes graphically, connected to the said means intended to deliver coded information.

Fig.1

Fig.2

Fig.3

Fig.4a

①

② 120

N ← A > 21.33 A₋₂ Y

121
$A_{-2} = A_{-1}$
122
$A_{-1} = A/16$

123
Clear the 4 former bits in the temporary buffer

124
Read the last 7 bits word in the temporary buffer

125
Decode the word with the table

126
Character = end N → 128
Error message

Y

127
Store the character in the work readingbuffer and display on the screen

136
Character = function N

Y

137
Inversion in the bits order the 1st becomes the last and the last becomes the first

129
Read the former word

130
Decode the word with the table

131
Unknown word Y → Error message
132

N

133
Store the character in the work reading buffer and display on the screen

134
Y ← Other word N

135
Proceed a new bar code
New initialisation
A = 0
$A_{-2} = 98\ 301$
$A_{-1} = 98\ 301$

③

Fig.4b

Initialisation printing mode —200

Initialisation of the work printing buffer Setting of the function characters and 2 at the beginning of the work printing buffer —201

Character prompt —202

Character entered by keyboard —203 · N · Y

Store in the work pinting buffer —204

Validation activated —205 · N · Y

Insert a function character and 0 in the work printing buffer and ending chain character in the printing buffer —206

Read the first character in the work printing buffer —207

Character in the table —208 · N

Error message —209

Buffers cleared —210

Set the associated binary word in the temporary printing buffer —211

End chain character —212 · N · Y

Set the word "0000000" in the temporary printing buffer —213

Fig. 5A

1

1

Read the 1st bit
in the temporary
printing buffer — 214

n = 0 — 215

Read digital state
following bit — 216

Current digital state
=
former digital state — 217

Y

N

Print the line with the
previous digital state
with a $2^n$ width — 218

n = 0 — 219

n = 2 — 222

n = 0 — 220

Y

N

n = n + 1 — 221

n = 5 — 223

Y

N

End of bar code
printing
buffers cleared — 224

Fig.5B

**European Patent Office**

## EUROPEAN SEARCH REPORT

Application Number

EP 95 40 0178

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 004 131 (TETTEMER ONEIL ET AL.) * abstract; figures 1,2 * | 1-8 | G06K19/06 G06K7/14 |
| Y | * column 2, line 46 - column 4, line 16 * | 18,19 | |
| Y | EP-A-0 575 989 (SYMBOL TECHNOLOGIES, INC.) * column 7, line 50 - column 9, line 29; figures 5-7 * | 18,19 | |
| X | COMPUTER, vol.23, no.4, April 1990, LOS ALAMITOS, US pages 74 - 86, XP000116777 THEO PAVLIDIS, JEROME SWARTZ AND YNJIUN P. WANG 'fundamentals of bar code information theory' * page 75, column 1, paragraph 5 - column 2, paragraph 3; figure 1 * | 1-8 | |
| X | LE NOUVEL AUTOMATISME, vol.30, no.52, March 1985, PARIS pages 45 - 51 DANIEL MANSON 'les codes à barres' * page 46, column 3, paragraph 4 - page 47, column 1, paragraph 1; figure 1 * | 1-8 | |
| X A | EP-A-0 180 152 (KABUSHIKI KAISHA SATO) * page 7, paragraph 5 - page 8, paragraph 2; figure 1 * * page 15, paragraph 4 - page 17, paragraph 3 * | 9 10,11, 13-19 | |
| A | US-A-4 147 295 (NOJIRI ET AL.) * column 4, line 3 - line 29; figure 3 * | 10,11,13 | |
| A | EP-A-0 531 577 (SYMBOL TECHNOLOGIES, INC.) * column 10, line 10 - column 11, line 18 * | 10,11,13 | |

**TECHNICAL FIELDS SEARCHED (Int.Cl.6)**

G06K

The present search report has been drawn up for all claims

| Place of search | Date of completion of the search | Examiner |
|---|---|---|
| THE HAGUE | 31 May 1995 | Chiarizia, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)